# EUROPEAN PATENT SPECIFICATION

(11) **EP 2 273 316 B1**
(45) Date of publication and mention of the grant of the patent: **14.10.2015**
(21) Application number: 10002428.0
(22) Date of filing: 09.03.2010
(51) Int. Cl.: G03G 9/08, G03G 9/093, G03G 9/087, G02F 1/167

(54) **Process for producing electret fine particles**
Verfahren zur Herstellung feiner Elektretpartikel
Procédé de production de fines particules d'électret

(30) Priority: 06.07.2009 JP 2009159760
(43) Date of publication of application: 12.01.2011
(73) Proprietor: Sakura Color Products Corporation, Osaka-shi, Osaka 537-0025 (JP)
(72) Inventor: Inoue, Hiroshi, Osaka-shi Osaka 5408508 (JP); Okuda, Masahiro, Nara 6320005 (JP)
(74) Representative: Müller-Boré & Partner Patentanwälte PartG mbB

(56) References cited:
- EP-A2- 1 715 387
- JP-A- 2005 154 705

## Description

The present invention relates to a process for producing electret fine particles that are useful as electrophoretic fine particles used for a full-color electrophoretic display apparatus (so-called "electronic paper").

In recent years, the electrophoretic display method, which employs the electrophoresis of charged fine particles (electret fine particles), has been attracting attention as the most promising technology for a next-generation display apparatus. However, this technology still has many problems including the shape of charged fine particles, small and unstable charge potential (ζ potential), secondary aggregation or sedimentation of electrophoretic particles, inadequate deletion of previously displayed images, unsatisfactory response speed, and the like.

Patent Literatures 1 and .2 disclose electret fine particles used as a powder material for an image display apparatus. More specifically, Patent Literature 1 teaches the production of positively-charged or negatively-charged electret fine particles by way of pulverizing previously-prepared electret material (e.g. a film). The particles produced by the pulverization have a large particle diameter and therefore require screening; production yield is decreased as a result. Patent Literature 2 discloses another electret fine particle production method that also involves resin pulverization and screening. This method has the same problem as that of Patent Literature 1. Patent Literature 2 also discloses production method in which a molten resin is extruded into the air or into a fluid while a voltage is applied thereto, or in which the resin is sprayed. However, this method has many problems including the limited size of the extrusion outlet, adhesion/aggregation of the sprayed particles, and the like. These problems hinder miniaturization of the particles to the desired extent and thereby decrease the production efficiency.

Accordingly, there have been demands for a technology that enables easy and efficient production of electret fine particles without the conventional pulverization process or screening process.

### [Patent Literature]

[PTL 1] Japanese Unexamined Patent Publication No. 2005-31189
[PTL 2] Japanese Unexamined Patent Publication No. 2007-206570

Further, JP 2005-154705 A discloses negatively charged fine particles formed by adding a resin having an electron trap into each core resin of spheric ultra-fine particles having a diameter of 1 to 10 µm formed by polymerization of a polymeric fine particle material, irradiating them with a 10-300 kGy electron ray to form electret-type negatively charged fine particles, and the core resins being colored as desired.

An object of the present invention is to provide a method that enables easy and efficient production of fine electret fine particles without the conventional pulverization or screening process.

The inventor of the present invention conducted extensive research to solve the foregoing problems, and found that the above object can be attained by producing fine particles by emulsifying a fluorine-containing compound or fluorine-containing polymerizable compound in the liquid phase under atmospheric or elevated pressure. With this finding, the inventors completed the present invention.

Specifically, the present invention relates to the following electret fine particle production process.
Item 1. A method of producing electret fine particles, comprising emulsifying a fluorine-containing compound in a liquid phase under atmospheric or elevated pressure in a liquid that is incompatible with the fluorine-containing compound, to obtain emulsified particles, redispersing the emulsified particles in an electrophoretic medium and then irradiating the emulsified particles with an electron ray or a radial ray, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.
Item 2. The method of producing electret fine particles according to Item 1, wherein the emulsified particles are processed into microcapsules to obtain microcapsule particles, and the microcapsule particles are redispersed in an electrophoretic medium and then irradiated with an electron ray or a radial ray.
Item 3. A method of producing electret fine particles, comprising emulsifying a fluorine-containing polymerizable compound in a liquid phase under atmospheric or elevated pressure in a liquid that is incompatible with the fluorine-containing polymerizable compound, to obtain emulsified particles, curing the emulsified particles to obtain cured particles, redispersing the cured particles in an electrophoretic medium and then irradiating the cured particles with an electron ray or a radial ray, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.
Item 4. The method of producing electret fine particles according to Item 3, wherein the emulsified particles are processed into microcapsules to obtain microcapsule particles before being cured.
Item 5. The method of producing electret fine particles according to Item 3, wherein the cured particles are processed into microcapsules to obtain microcapsule particles before being redispersed in an electrophoretic medium and then irradiated with an electron ray or a radial ray.
Item 6. The method of producing electret fine particles according to any one of Items 1 to 5, wherein the emulsified particles contain a hydrophobic pigment.
Item 7. A method of producing electret fine particles, comprising emulsifying a fluorine-containing compound in a liquid phase under atmospheric or elevated pressure in a liquid that is incompatible with the fluorine-containing compound, to obtain emulsified particles, and irradiating the emulsified particles with an electron ray or a radial ray, wherein the liquid that is incompatible with the fluorine-containing compound is an electrophoretic medium, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.
Item 8. A method of producing electret fine particles, comprising emulsifying a fluorine-containing polymerizable compound in a liquid phase under atmospheric or ele-vated pressure in a liquid that is incompatible with the fluorine-containing polymerizable compound, to obtain emulsified particles, curing the emulsified particles to obtain cured particles, and irradiating the cured particles with an electron ray or a radial ray, wherein the liquid that is incompatible with the fluorine-containing polymerizable compound is an electrophoretic medium, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.
Item 9. The method of producing electret fine particles according to any one of Items 1 to 8, wherein the mean particle diameter of the electret fine particles falls within the range of 0.01 to 20µm.

The following specifically explains the electret fine particle production process according to the present invention.

The electret fine particle production process according to the present invention is roughly classified into a method using a fluorine-containing (unpolymerized) compound as detailed in the First Embodiment and a method using a fluorine-containing polymerizable compound as detailed in the Second Embodiment.

### ▪First Embodiment

The production process according to First Embodiment involves the emulsification of a fluorine-containing compound in the liquid phase under atmospheric or elevated pressure in a liquid that is incompatible with the fluorine-containing compound, to produce emulsified particles, which are then irradiated with an electron ray or a radial ray to produce electret fine particles. A suitable example of a fluorine-containing compound having a liquid phase under elevated pressure is a fluorine-containing compound having a liquid phase at a temperature of about 0°C to 100°C, and a pressure of 5 to 30 bar. When this compound is used, the above production of emulsified particles is carried out in the condition under which the compound is in the liquid phase. Examples of the fluorine-containing compound include various known fluorine-containing resins, fluorine-containing oils, and fluorine-containing adhesives.

Examples of the fluorine-containing resins include tetrafluoroethylene resin, such as polytetrafluoroethylene (PTFE) represented by FR₁C=R₁R₂, wherein R₁=F or H, R₂=F or H or Cl or other arbitrary elements.

Examples of the fluorine-containing oils include perfluoropolyether oil, chlorotrifluoroethylene oligomer, , such as perfluoropolyether oil (product name: "DEMNUM", Daikin Industries, Ltd.), chlorotrifluoroethylene oligomer (product name: "DAIFLOIL", Daikin Industries, Ltd.).

Examples of the fluorine-containing adhesives include ultraviolet-curable fluorinated epoxy adhesives, such as (product name: "OPTODYNE" Daikin Industries, Ltd.).

The liquid that is incompatible with the fluorine-containing compound is not limited. Examples of these liquids include water, ethylene glycol (EG), propylene glycol (PG), glycerin, and silicone oil. A suitable liquid is selected from these liquids depending on the fluorine-containing compound to be used. Further, a so-called electrophoretic medium may be used as the liquid that is incompatible with the fluorine-containing compound. Examples of the electrophoretic media include ethylene glycol (EG), propylene glycol (PG), glycerin, silicone oil, fluorine-containing oil, and petroleum oil. Examples of silicone oil include dimethyl silicone oil. Examples of fluorine-containing oil include perfluoropolyether oil.

Examples of the emulsifiers for emulsifying the liquid fluorine-containing compound include polyvinyl alcohol and ethylene maleic anhydride. The content of the emulsifier in the liquid that is incompatible with the fluorine-containing compound is preferably about 1 to 10 wt%. Emulsified particles may be prepared by supplying those components in a known mixing device such as a stirrer, mixer, or homogenizer, and evenly mixing them. Mixing is preferably performed under heat.

It is possible to obtain colored emulsified particles by incorporating a hydrophobic pigment in the fluorine-containing compound in advance. In this case, colored electret fine particles, which are useful as material for full-color electronic paper, are obtained.

The hydrophobic inorganic pigment is not limited. For example, black pigments containing carbon as a main component, such as carbon black, lamp black, bone black, or botanical black, can be used. As white pigments, titanium oxide, zinc oxide, calcium carbonate, barium sulfate, and silicon oxide can be used. The white pigments are useful for production of white electrophoretic particles or for the adjustment of the specific gravity of the particles.

The hydrophobic organic pigment is not limited. Examples of hydrophobic organic pigments include azo pigments such as β-naphthol-based pigments, naphthol AS-based pigments, acetoacetic acid-based pigments, aryl amide-based pigments, pyrazolone-based pigments, β-naphthol-based pigments, β-oxynaphthoic acid-based pigments (BON acid-based azo pigments), naphthol AS-based pigments, or acetoacetic acid allylide-based pigments; and polycyclic pigments, such as phthalocyanine-based pigments, anthraquinone-based (threne) pigments, perylene-based or perinone-based pigments, indigo-based or thioindigo-based pigments, quinacridone-based pigments, dioxazine-based pigments, isoindolinone-based pigments, quinophthalone-based pigments, metal complex pigments, methine-based or azo methine-based pigments, diketopyrrolopyrrole-based pigments. In addition, azine pigments, daylight fluorescent pigments (resin dye solid solution), hollow resin pigments, nitroso pigments, nitro pigments, or natural pigments may also be used.

The hydrophobic organic pigment may be selected from commercial products, such as Symuler Fast Yellow 4GO, Fasdtogen Super Magenta RG, Fasdtogen Blue TGR (DIC Corporation), or Fuji Fast Red 7R3300E, Fuji Fast Carmine 527 (Fuji Shikiso K.K.).

The particle diameter of each hydrophobic pigment is preferably 0.02 to 20µm, more preferably about 0.02 to 3µm.

The mean particle diameter of the obtained emulsified particles is not limited, but preferably is in a range of 0.01 to 20µm, more preferably about 0.1 to 5µm.

The emulsified particles may be directly processed by an electron ray or a radial ray into electret particles; however, it is more preferable to first subject the particles to microcapsulation to obtain microcapsule particles before processing them into electret fine particles. The microcapsulation can be easily performed by mixing the emulsified particles with the wall material of the microcapsules and stirring the mixture.

The microcapsules may have any known structure, provided that they have emulsified particles incorporated therein. For example, the microcapsules may be formed by incorporating emulsified particles in the wall material.

Generally, a resin-based wall film is suitable for the wall material. Examples of the resin include various thermoplastic resins and thermosetting resins, such as epoxy resins, polyamide resins, acrylonitrile resins, polyurethane resins, polyurea resins, urea-formaldehyde-based resins, melamine-formaldehyde-based resins, benzoguanamine resins, butylated melamine resins, butylated urea resins, or urea-melamine-based resins. The resin materials for the resin component may be used alone or in a combination of two or more kinds. When the particles are processed into microcapsules, the microcapsulation may be appropriately performed by polymerizing the resin materials.

The method for microcapsulation may be selected from, for example, interfacial polymerization (polycondensation, addition condensation), in situ polymerization, coacervation method, drying-in liquid method, or spray-drying method.

For example, the microcapsulation may be carried out using in situ polymerization, comprising a first step of stirring the fluorine-containing compound (corresponding to the oil phase in the later-described example); a second step of stirring a mixture (corresponding to the water phase in the later-described example) of the emulsifier and a liquid that is incompatible with the fluorine-containing compound; a third step of stirring the water phase to mix it with the oil phase, thereby preparing emulsified particles; and a fourth step of adding the above resin as a wall material to the emulsion of the emulsified particles and stirring the mixture under heat. With this method, the microcapsules are appropriately produced.

The emulsified particles or microcapsule particles can be processed into electret particles by irradiating the emulsified particles or microcapsule particles, which are either in the form of a suspension or are redispersed in an electrophoretic medium, by an electron ray or a radial ray. The conditions of irradiation using an electron ray or a radial ray are not limited insofar as the emulsified particles or microcapsule particles are properly processed into electret particles. For example, the irradiation may be carried out by emitting an electron ray of about 10 to 50kGy using an electron linear accelerator. Radial ray irradiation is performed by emitting a gamma ray of 1 to 15kGy.

Using the above method, electret fine particles in a range of 0.01 to 20µm that have high uniformity can be obtained with high efficiency in an appropriate embodiment. The production process of the present invention enables easy production of electret fine particles having high uniformity that are almost entirely charged to or charged beyond a certain extent (negatively charged) at a high yield, without requiring conventional pulverization or screening.

### ▪Second Embodiment

The production process according to Second Embodiment involves the emulsification of a liquid fluorine-containing polymerizable compound under atmospheric or elevated pressure in a liquid that is incompatible with the fluorine-containing polymerizable compound, to produce emulsified particles, which are then cured before being irradiated with an electron ray or a radial ray to produce electret fine particles. A suitable example of the fluorine-containing polymerizable compound having a liquid form phase under elevated pressure is a fluorine-containing polymerizable compound having a liquid phase at a temperature of about 0°C to 100°C, and a pressure of 5 to 30 bar. When this compound is used, the emulsified particles are prepared under conditions in which the compound is in the liquid phase. Examples of the fluorine-containing polymerizable compound include various known fluorine-containing elastomers, fluorine-containing varnishes, and polymerizable fluorocarbon resins.

Examples of the fluorine-containing elastomers include straight-chain fluoropolyether compounds, such as "SIFEL3590-N", "SIFEL2610", "SIFEL8470" (all are products of Shin-Etsu Chemical Co., Ltd.).

Examples of the fluorine-containing varnishes include tetrafluoride ethylene/vinyl monomer copolymer (product name: "Zeffle", Daikin Industries, Ltd.).

Examples of the polymerizable fluorocarbon resins include polymerizable amorphous fluorocarbon resin (product name: "CYTOP", Asahi Glass Co., Ltd.).

The liquid that is incompatible with the fluorine-containing polymerizable compound is not limited, and aforementioned examples of liquids that are incompatible with the fluorine-containing compounds may be used. Further, the same emulsifiers and hydrophobic pigments indicated above may be used. The mean particle diameter of the particles resulting from the emulsification is not limited, but preferably is 0.01 to 20µm, and more preferably about 0.1 to 5µm.

In Second Embodiment, the emulsified particles are cured with heat, or ultraviolet irradiation. When curing with heat, for example, the emulsified particles are heated at about 80°C for about an hour. When curing with ultraviolet irradiation, the emulsified particles undergo 1 to 2J/cm² ultraviolet irradiation having a wavelength of 365nm.

As required, the emulsified particles may be processed into microcapsules in the manner mentioned above, before or after being cured.

The cured particles or microcapsule particles can be processed into electret particles by irradiating the particles, which are either in the form of suspension or being redispersed in an electrophoretic medium, using an electron ray or a radial ray. The conditions of irradiation with an electron ray or a radial ray are not limited insofar as the emulsified particles or microcapsule particles are properly processed into electret particles. For example, irradiation is carried out by emitting an electron ray of about 10 to 50kGy using an electron linear accelerator. Radial ray irradiation is performed by emitting a gamma ray of 1 to 15kGy.

With the above method, electret fine particles in a range of 0.01 to 20µm that have high uniformity can be obtained with high efficiency in an appropriate embodiment. The production process of the present invention enables easy production of electret fine particles having high uniformity that are almost entirely charged to or beyond a certain extent (a negative charge) at a high yield, without requiring conventional pulverization or screening.

The production process according to the present invention enables easy production of electret fine particles having a highly uniform particle diameter, without requiring conventional pulverization or screening. The electret fine particles are useful for electret fine particles for electrophotography toner, or electronic papers. The electret fine particles are charged to a high voltage and thereby allow for an increase in rewriting speed. Further, the highly uniform fine particles allow high definition images to be created. The fine particles are also useful as materials for electret fibers, nonwoven fabric, filtering media (filters), vacuum cleaner bags, and electret capacitor microphones.
FIG. 1 is a drawing showing an SEM image and a particle size distribution measurement of microcapsule fine particles obtained in Example 1 (Composition A) and Example 2 (Composition B).
FIG. 2 is a drawing showing an SEM image and a particle size distribution measurement of microcapsule fine particles obtained in Example 3 (Composition C), Example 4 (Composition D) and Example 5 (Composition E).

The following more specifically describes the present invention with reference to preparation examples and a test example. However, the present invention is not limited to these examples.

Tables 1 and 2 show the names and the properties of the fluorine-containing compounds (fluorine-containing oil) and fluorine-containing polymerizable compounds (fluorine-containing elastomers) used in the preparation examples.

**[Table 1]**

| Manufacturer | Daikin Industries, Ltd. (Fluorocarbon Oils) | |
|---|---|---|
| Name | DEMNUM S-65 | DAIFLOIL #1 |
| Structure | Straight-chain Perfluoropolyether (PFPE) Oil | Ethylene Chloride Trifluoride Oligomer |
| Viscosity | 150cSt (20°C) | 10 to 30mPa·s (25°C) |
| Specific Gravity | 1.873 (20°C) | 1.85 to 1.89 (25°C) |
| Surface Tension | 18.0mN/m | 26 to 28mN/m |

**[Table 2]**

| Manufacturer | Shin-Etsu Chemical Co., Ltd. (Fluorocarbon Elastomer) | | |
|---|---|---|---|
| Name | SIFEL3590-N | SIFEL2610 | SIFEL8470 |
| Structure | Fluorocarbon Polyether Skeleton and Silicone Crosslinking Reaction Group at the Terminal | | |
| | 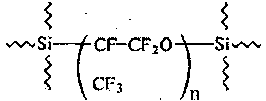 | | |
| Viscosity | 50Pa·s (23°C) | 6Pa·s (23°C) | 3.2Pa·s (23°C) |
| Density | 1.88g/cm3 (23°C) | 1.77g/cm³ (23°C) | 1.84g/cm³ (25°C) |
| Hardness | Penetration:55 | Penetration:35 | Penetration:70 |
| Appearance | Milky White Liquid | Milky White Liquid | Transparent Pale Yellow |

**[Table 3]**

| Manufacturer | Daikin Industries, Ltd. (Fluorocarbon Varnishe) |
|---|---|
| Name | Zeffle GK-570 |
| Structure | Tetrafluoride ethylene/vinyl monomer copolymer |
| Viscosity | 700 to 2100mPa·s (20°C) |

### Preparation Examples 1 and 2 (preparation of microcapsule fine particles)

Three kinds of mixture materials formed of Compositions A, B, and A' were prepared. Composition A' has the same composition as that of Composition A except for incorporation of a pigment (Fastgen super magenta RG))

**[Table 4]**

| Composition A | Composition B |
|---|---|
| (1) Water Phase (Emulsifier) | (1) Water Phase (Emulsifier) |
| Ion-exchange Water 48.3g | Ion-exchange Water 48.3g |
| Caustic soda 20P liquid 1.0g | Caustic soda 20P liquid 1.0g |
| ZEMAC E400 1.8g | ZEMAC E400 1.8g |
| Total 51.0g | Total 51.0g |
| (2) Oil Phase | (2) Oil Phase |
| DEMNUM S-65 35.0g | Daifloil #1 35.0g |
| (3) Wall Material | (3) Wall Material |
| Ion-exchange water 10.0g | Ion-exchange water 10.0g |
| Melamine 3.0g | Melamine 3.0g |
| Formalin 7.5g | Formalin 7.5g |
| Total 20.5g | Total 20.5g |

| Composition A' | |
|---|---|
| (1) Water Phase (Emulsifier) | |
| Ion-exchange water 48.3g | |
| Caustic soda 20P liquid 1.0g | |
| ZEMAC E400 1.8g | |
| Total 51.0g | |
| (2) Oil Phase | |
| DEMNUM S-65 35.0g | |
| Fastgen super magenta RG (Pigment) | |
| 0.4g | |
| Total 35.4g | |
| (3) Wall Material | |
| Ion-exchange water 10.0g | |
| Melamine | |
| 3.0g | |
| Formalin | |
| 7.5g | |
| Total 20.5g | |

(In the table, ZEMAC E400 is an emulsifier (Ethylene maleic anhydride copolymer)

The preparation was carried out as follows.

The water phase component was stirred at room temperature, followed by further stirring while heating at 75°C for an hour. The resulting liquid was cooled at room temperature to prepare a water phase.

A mixture obtained by adding ion exchange water to melamine was stirred while heating (65°C, 1000 rpm, 5 minutes). After adding formalin, the mixture was stirred while heating (65°C, 1000 rpm, 15 minutes) to prepare a wall material.

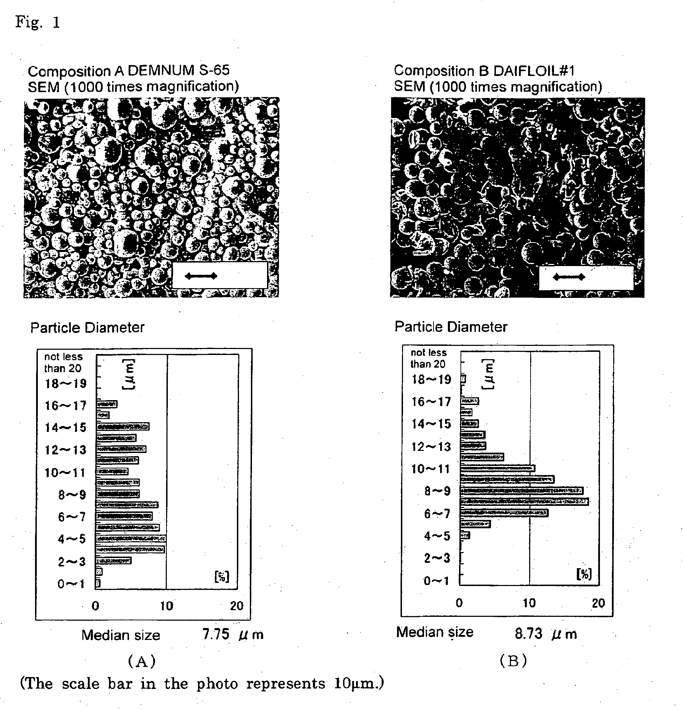

The oil phase was added to the water phase while stirring (20°C, 1500 rpm, 5 minutes). The mixture of the water phase and the oil phase was heated to 75°C, the wall material was added thereto, and the mixture was heated while stirring (65°C, 1000 rpm, 2 hours). A suspension in which microcapsule fine particles were dispersed was obtained. FIG. 1 shows an SEM image and a particle size distribution measurement of the microcapsule fine particles.

### Preparation Examples 3 to 5 (preparation of polymerizable fine particles)

Five kinds of mixture materials formed of Compositions C, D, E, F, and C' were prepared. Composition C' has the same composition as that of Composition C except for incorporation of a pigment (Symuler fast yellow).

**[Table 5]**

| Composition C | Composition D | Composition E |
|---|---|---|
| (1) Emulsifier | (1) Emulsifier | (1) Emulsifier |
| Ion-exchange water 90.0g | Ion-exchange water 90.0g | Ion-exchange water |
| PVA224 10.0g | PVA224 10.0g | 90.0g |
| Total 100.0g | Total 100.0g | PVA224 10.0g |
| | | Total 100.0g |
| (2) Fluorocarbon Elastomer SIFEL3590-N 10.0g | (2) Fluorocarbon Elastomer SIFEL2610 10.0g | (2) Fluorocarbon Elastomer SIFEL8470 10.0g |

| Composition F | Composition C' | |
|---|---|---|
| (1) Emulsifier | (1) Emulsifier | |
| Ion-exchange water 90.0g | Ion-exchange water 90.0g | |
| PVA224 10.0g | PVA224 10.0g | |
| Total 100.0g | Total 100.0g | |
| (2) Fluorocarbon varnishe + Pigment | (2) Fluorocarbon Elastomer + Pigment | |
| Zeffle GK-570 10.0g | SIFEL3590-N 10.0g | |
| Desmodur L75C | Symuler fast yellow | |
| (Curing agent) 2.4g | (Pigment) 1.0g | |
| Symuler fast yellow | Total 11.0g | |
| (Pigment) 1.0g | | |
| Total 13.4g | | |

(In the table, PVA224 is a thickener (polyvinyl alcohol))

The preparation was carried out as follows.

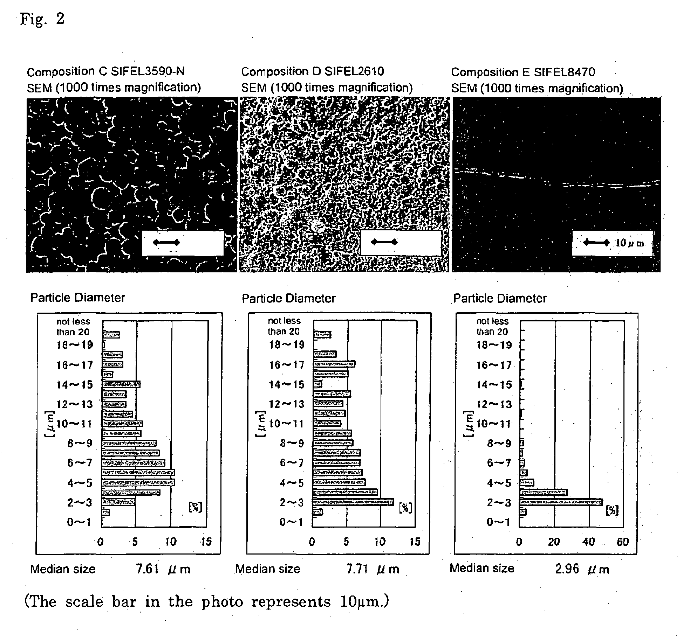

A fluorine-containing elastomer (composition example: C, D, E, and C') or a fluorine-containing varnish (composition example: F) was added to an emulsifier and stirred with a homo mixer (6000 rpm, 6 minutes). Thereafter, the emulsion was heated while stirring using a dissolver (300 rpm, 80°C, 8 hours). A suspension in which particles were dispersed was obtained. FIG. 2 shows an SEM image and a particle size distribution measurement of the particles.

### ■Test Example 1 (electrophoresis test)

The fine particles obtained in Preparation Examples 1 to 5 were separately dispersed in a white insulating liquid (silicon oil, KF96L-0.65, Shin-Etsu Chemical Co., Ltd.).

2cc of each dispersion was wrapped with two 7cm×7cm PET films (Mylar 850, 15 to 30µm in thickness: produced by Teijin) and the four corners of the layered films were sealed by heating. The entire thickness was 0.5 to 1µm. Then, the dispersion liquid was irradiated with an electron ray using an electron linear accelerator (10 minutes irradiation at 400keV, 150µA), thereby processing the dispersion into electret fine particles. Five kinds of sample electret fine particle dispersions were obtained.

For comparison, another five samples were prepared with no electron ray irradiation.

Each end of the samples and the comparative samples was clipped to a terminal of a high voltage power supply. 2000V was applied across the clips on both ends, and electrophoresis was observed.

The samples processed into electret fine particles underwent regular electrophoretic migration at high speed, and all particles were moved to the positive electrode. In contrast, the samples of non-electret fine particles underwent irregular electrophoretic migration, and the particles were separated to the positive electrode and the negative electrode.

## Claims

1. A method of producing electret fine particles, comprising emulsifying a fluorine-containing compound in a liquid phase under atmospheric or elevated pressure in a liquid that is incompatible with the fluorine-containing compound, to obtain emulsified particles, redispersing the emulsified particles in an electrophoretic medium and then irradiating the emulsified particles with an electron ray or a radial ray, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.

2. The method of producing electret fine particles according to claim 1, wherein the emulsified particles are processed into microcapsules to obtain microcapsule particles, and the microcapsule particles are redispersed in an electrophoretic medium and then irradiated with an electron ray or a radial ray.

3. A method of producing electret fine particles, comprising emulsifying a fluorine-containing polymerizable compound in a liquid phase under atmospheric or elevated pressure in a liquid that is incompatible with the fluorine-containing polymerizable compound, to obtain emulsified particles, curing the emulsified particles to obtain cured particles, redispersing the cured particles in an electrophoretic medium and then irradiating the cured particles with an electron ray or a radial ray, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.

4. The method of producing electret fine particles according to claim 3, wherein the emulsified particles are processed into microcapsules to obtain microcapsule particles before being cured.

5. The method of producing electret fine particles according to claim 3, wherein the cured particles are processed into microcapsules to obtain microcapsule particles before being redispersed in an electrophoretic medium and then irradiated with an electron ray or a radial ray.

6. The method of producing electret fine particles according to any one of claims 1 to 5, wherein the emulsified particles contain a hydrophobic pigment.

7. A method of producing electret fine particles, comprising emulsifying a fluorine-containing compound in a liquid phase under atmospheric or elevated pressure in a liquid that is incompatible with the fluorine-containing compound, to obtain emulsified particles, and irradiating the emulsified particles with an electron ray or a radial ray, wherein the liquid that is incompatible with the fluorine-containing compound is an electrophoretic medium, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.

8. A method of producing electret fine particles, comprising emulsifying a fluorine-containing polymerizable compound in a liquid phase under atmospheric or elevated pressure in a liquid that is incompatible with the fluorine-containing polymerizable compound, to obtain emulsified particles, curing the emulsified particles to obtain cured particles, and irradiating the cured particles with an electron ray or a radial ray, wherein the liquid that is incompatible with the fluorine-containing polymerizable compound is an electrophoretic medium, wherein the radial ray irradiation is performed by emitting a gamma ray of 1 to 15 kGy, and wherein the electrophoretic medium includes ethylene glycol (EG), propylene glycol (PG), glycerin, silicone oil, fluorine-containing oil, and petroleum oil.

9. The method of producing electret fine particles according to any one of claims 1 to 8, wherein the mean particle diameter of the electret fine particles falls within the range of 0.01 to 20µm.

## Patentansprüche

1. Verfahren zur Herstellung feiner Elektretpartikel, umfassend das Emulgieren einer Fluor enthaltenden Verbindung in einer flüssigen Phase unter atmosphärischem oder erhöhtem Druck in einer Flüssigkeit, die mit der Fluor enthaltenden Verbindung inkompatibel ist, um emulgierte Partikel zu erhalten, das Redispergieren der emulgierten Partikel in einem elektrophoretischen Medium und anschließend das Bestrahlen der emulgierten Partikel mit einem Elektronenstrahl oder einem Radialstrahl, wobei die Radialstrahlbestrahlung durch das Emittieren eines Gammastrahls von 1 bis 15 kGy durchgeführt wird, und wobei das elektrophoretische Medium Ethylenglykol (EG), Propylenglykol (PG), Glycerin, Silikonöl, Fluor enthaltendes Öl und Mineralöl einschließt.

2. Verfahren zur Herstellung feiner Elektretpartikel nach Anspruch 1, wobei die emulgierten Partikel zu Mikrokapseln verarbeitet werden, um Mikrokapselpartikel zu erhalten, und die Mikrokapselpartikel in einem elektrophoretischen Medium redispergiert und anschließend mit einem Elektronenstrahl oder einem Radialstrahl bestrahlt werden.

3. Verfahren zur Herstellung feiner Elektretpartikel, umfassend das Emulgieren einer Fluor enthaltenden polymerisierbaren Verbindung in einer flüssigen Phase unter atmosphärischem oder erhöhtem Druck in einer Flüssigkeit, die mit der Fluor enthaltenden polymerisierbaren Verbindung inkompatibel ist, um emulgierte Partikel zu erhalten, das Härten der emulgierten Partikel, um gehärtete Partikel zu erhalten, das Redispergieren der gehärteten Partikel in einem elektrophoretischen Medium und anschließend das Bestrahlen der gehärteten Partikel mit einem Elektronenstrahl oder einem Radialstrahl, wobei die Radialstrahlbestrahlung durch das Emittieren eines Gammastrahls von 1 bis 15 kGy durchgeführt wird, und wobei das elektrophoretische Medium Ethylenglykol (EG), Propylenglykol (PG), Glycerin, Silikonöl, Fluor enthaltendes Öl und Mineralöl einschließt.

4. Verfahren zur Herstellung feiner Elektretpartikel nach Anspruch 3, wobei die emulgierten Partikel zu Mikrokapseln verarbeitet werden, um Mikrokapselpartikel zu erhalten bevor sie gehärtet werden.

5. Verfahren zur Herstellung feiner Elektretpartikel nach Anspruch 3, wobei die gehärteten Partikel zu Mikrokapseln verarbeitet werden, um Mikrokapselpartikel zu erhalten bevor sie in einem elektrophoretischen Medium redispergiert und anschließend mit einem Elektronenstrahl oder einem Radialstrahl bestrahlt werden.

6. Verfahren zur Herstellung feiner Elektretpartikel nach einem der Ansprüche 1 bis 5, wobei die emulgierten Partikel ein hydrophobes Pigment enthalten.

7. Verfahren zur Herstellung feiner Elektretpartikel, umfassend das Emulgieren einer Fluor enthaltenden Verbindung in einer flüssigen Phase unter atmosphärischem oder erhöhtem Druck in einer Flüssigkeit, die mit der Fluor enthaltenden Verbindung inkompatibel ist, um emulgierte Partikel zu erhalten, und das Bestrahlen der emulgierten Partikel mit einem Elektronenstrahl oder einem Radialstrahl, wobei die Flüssigkeit, die mit der Fluor enthaltenden Verbindung inkompatibel ist, ein elektrophoretisches Medium ist, wobei die Radialstrahlbestrahlung durch das Emittieren eines Gammastrahls von 1 bis 15 kGy durchgeführt wird, und wobei das elektrophoretische Medium Ethylenglykol (EG), Propylenglykol (PG), Glycerin, Silikonöl, Fluor enthaltendes Öl und Mineralöl einschließt.

8. Verfahren zur Herstellung feiner Elektretpartikel, umfassend das Emulgieren einer Fluor enthaltenden polymerisierbaren Verbindung in einer flüssigen Phase unter atmosphärischem oder erhöhtem Druck in einer Flüssigkeit, die mit der Fluor enthaltenden polymerisierbaren Verbindung inkompatibel ist, um emulgierte Partikel zu erhalten, das Härten der emulgierten Partikel, um gehärtete Partikel zu erhalten, und das Bestrahlen der gehärteten Partikel mit einem Elektronenstrahl oder einem Radialstrahl, wobei die Flüssigkeit, die mit der Fluor enthaltenden polymerisierbaren Verbindung inkompatibel ist, ein elektrophoretisches Medium ist, wobei die Radialstrahlbestrahlung durch das Emittieren eines Gammastrahls von 1 bis 15 kGy durchgeführt wird, und wobei das elektrophoretische Medium Ethylenglykol (EG), Propylenglykol (PG), Glycerin, Silikonöl, Fluor enthaltendes Öl und Mineralöl einschließt.

9. Verfahren zur Herstellung feiner Elektretpartikel nach einem der Ansprüche 1 bis 8, wobei der mittlere Durchmesser der feinen Elektretpartikel in den Bereich von 0,01 bis 20 µm fällt.

## Revendications

1. Procédé de production de fines particules d'électret, comprenant l'émulsification d'un composé contenant du fluor dans une phase liquide à pression atmosphérique ou élevée dans un liquide qui est incompatible avec le composé contenant du fluor, pour obtenir des particules émulsifiées, la redispersion des particules émulsifiées dans un milieu électrophorétique, puis l'exposition des particules émulsifiées à un rayonnement d'électrons ou à un rayonnement radial, dans lequel l'exposition à un rayonnement radial est mise en oeuvre par émission d'un rayonnement gamma de 1 à 15 kGy, et dans lequel le milieu électrophorétique contient de l'éthylène glycol (EG), du propylène glycol (PG), du glycérol, une huile silicone, une huile fluorée, et une huile dérivée du pétrole.

2. Procédé de production de fines particules d'électret selon la revendication 1, dans lequel les particules émulsifiées sont converties en microcapsules pour obtenir des particules en microcapsules, et les particules en microcapsules sont redispersées dans un milieu électrophorétique, puis exposées à un rayonnement d'électrons ou à un rayonnement radial.

3. Procédé de production de fines particules d'électret, comprenant l'émulsification d'un composé polymérisable contenant du fluor dans une phase liquide à pression atmosphérique ou élevée dans un liquide qui est incompatible avec le composé polymérisable contenant du fluor, pour obtenir des particules émulsifiées, le durcissement des particules émulsifiées pour obtenir des particules durcies, la redispersion des particules durcies dans un milieu électrophorétique, puis l'exposition des particules durcies à un rayonnement d'électrons ou à un rayonnement radial, dans lequel l'exposition à un rayonnement radial est mise en oeuvre par émission d'un rayonnement gamma de 1 à 15 kGy, et dans lequel le milieu électrophorétique contient de l'éthylène glycol (EG), du propylène glycol (PG), du glycérol, une huile silicone, une huile fluorée, et une huile dérivée du pétrole.

4. Procédé de production de fines particules d'électret selon la revendication 3, dans lequel les particules émulsifiées sont converties en microcapsules pour obtenir des particules en microcapsules avant leur durcissement.

5. Procédé de production de fines particules d'électret selon la revendication 3, dans lequel les particules durcies sont converties en microcapsules pour obtenir des particules en microencapsules avant leur redispersion dans un milieu électrophorétique, puis leur exposition à un rayonnement d'électrons ou à un rayonnement radial.

6. Procédé de production de fines particules d'électret selon l'une quelconque des revendications 1 à 5, dans lequel les particules émulsifiées contiennent un pigment hydrophobe.

7. Procédé de production de fines particules d'électret, comprenant l'émulsification d'un composé contenant du fluor dans une phase liquide à pression atmosphérique ou élevée dans un liquide qui est incompatible avec le composé contenant du fluor, pour obtenir des particules émulsifiées, et l'exposition des particules émulsifiées à un rayonnement d'électrons ou à un rayonnement radial, dans lequel le liquide qui est incompatible avec le composé contenant du fluor est un milieu électrophorétique, dans lequel l'exposition à un rayonnement radial est mise en oeuvre par émission d'un rayonnement gamma de 1 à 15 kGy, et dans lequel le milieu électrophorétique contient de l'éthylène glycol (EG), du propylène glycol (PG), du glycérol, une huile silicone, une huile fluorée, et une huile dérivée du pétrole.

8. Procédé de production de fines particules d'électret, comprenant l'émulsification d'un composé polymérisable contenant du fluor dans une phase liquide à pression atmosphérique ou élevée dans un liquide qui est incompatible avec le composé polymérisable contenant du fluor, pour obtenir des particules émulsifiées, le durcissement des particules émulsifiées pour obtenir des particules durcies, et l'exposition des particules durcies à un rayonnement d'électrons ou à un rayonnement radial, dans lequel le liquide qui est incompatible avec le composé polymérisable contenant du fluor est un milieu électrophorétique, dans lequel l'exposition à un rayonnement radial est mise en oeuvre par émission d'un rayonnement gamma de 1 à 15 kGy, et dans lequel le milieu électrophorétique contient de l'éthylène glycol (EG), du propylène glycol (PG), du glycérol, une huile silicone, une huile fluorée, et une huile dérivée du pétrole.

9. Procédé de production de fines particules d'électret selon l'une quelconque des revendications 1 à 8, dans lequel le diamètre de particule moyen des fines particules d'électret s'inscrit dans la plage de 0,01 à 20 µm.
